# EUROPÄISCHE PATENTSCHRIFT

(11) **EP 2 636 758 B1**
(45) Veröffentlichungstag und Bekanntmachung des Hinweises auf die Patenterteilung: **22.03.2017**
(21) Anmeldenummer: 13000256.1
(22) Anmeldetag: 18.01.2013
(51) Int. Cl.: C21C 5/46, F16L 37/08, F16L 29/00, F16L 37/15, F16L 37/23, F16L 37/44

(54) **Lanzenhalter mit Sicherung für ungerade, insbesondere gebogene Sauerstofflanzen**
Lance holder with lock for curved lances, in particular curved oxygen lances
Support de lance avec une sécurité pour lances à oxygène non droites, en particulier courbées

(30) Priorität: 06.03.2012 DE 102012004515
(43) Veröffentlichungstag der Anmeldung: 11.09.2013
(73) Patentinhaber: BEDA Oxygentechnik Armaturen GmbH, 40885 Ratingen (DE)
(72) Erfinder: Bayer, Reinhardt, 47269 Duisburg (DE)
(74) Vertreter: Schulte & Schulte

(56) Entgegenhaltungen:
- EP-A2- 0 200 254
- DE-A1- 19 903 473
- DE-B4-102008 012 554

## Beschreibung

Die Erfindung betrifft einen Lanzenhalter für Lanzenrohre, insbesondere Sauerstofflanzen, die vor allem in der Hütten- und Stahlindustrie eingesetzt werden, mit einem Spannkopf, der ein das Lanzenrohr einfassendes Fixierteil und ein darauf verschiebbares, hülsenförmiges Spannteil aufweist, und einem das Lanzenrohr einklemmenden und über das Fixierteil beeinflussbaren und damit abdichtenden Hülsendichtring sowie einer Rückbrandsicherung und einem über eine Zylinderfeder beaufschlagten Rückschlagventil.

Ein solcher Lanzenhalter ist aus der DE 10 2008 012 554 B4 bekannt. Ein solcher Lanzenhalter wird für in der Regel mehrere Meter lange Lanzenrohre eingesetzt und hat den Vorteil, dass er zumindest in bestimmten Abständen für eine ganze Reihe von Lanzenrohrdurchmessern verwendbar ist. Bei diesem bekannten Lanzenhalter verfügt das Fixierteil über ein besonders ausgebildetes Fixierteil mit Druckelementen, also ein Bauteil, dass das in den Lanzenhalter eingeschobene Lanzenrohr so festhalten soll, dass das Lanzenrohr einwandfrei gehandhabt werden kann. Um die in das Fixierteil integrierten Druckelemente gegen das eingeschobene Lanzenrohr anpressen zu können, ist ein hülsenförmiges Spannteil vorgesehen, das über eine drehbare Spannhülse auf dem Lanzenhaltergehäuse verschraubbar ist. Dabei schiebt es das hülsenförmige Spannteil auf das Fixierteil und die Druckelemente, die dadurch dann dicht auf das Lanzenrohr aufgepresst werden und dies fixieren. So lange es sich um gerade Lanzenrohre handelt, kann mit dem beschriebenen Lanzenhalter gut gearbeitet werden. Häufig werden aber durch den Transport und die Lagerung verbogene Lanzenrohre eingesetzt oder solche mit einer bewussten Abwinkelung. Die Abwinkelung wird z. B. vorgesehen, um bei höheren Schmelzgefäßen ein einwandfreies Einführen des Lanzenrohres zu erleichtern. Bei solchen Lanzenrohren kann nicht immer sichergestellt werden, dass die Fixierung im Lanzenhalter gewahrt bleibt. Es kann dann zu Verdrehungen und zu Belastungen und Gefährdungen des den Lanzenhalter führenden Bedienungsmannes kommen. Aus der DE 199 03 473 A1 ist ein Lanzenhalter bekannt, bei dem das eingeschobene Lanzenrohr über eine Spannzange im Lanzenhalter festgelegt oder gelöst wird. Die auf die Spannzange einwirkende Druckhülse wird mechanisch über einen Kniehebel oder eine gasgeregelte Stelleinrichtung verschoben. Ein ebenfalls über Gas geregelter Druckkolben sorgt für ein dichtes Anliegen einer an das Lanzenrohr anpressbaren Dichtung. Auch bei diesem Lanzenhalter ist nicht sichergestellt, dass das Lanzenrohr immer sicher im Lanzenhalter fixiert bleibt und sich insbesondere bei abgewinkelten Lanzenrohren nicht verdreht.

Der Erfindung liegt daher die Aufgabe zu Grunde, einen die Manipulation insbesondere beim Einführen der abgewinkelten Lanzenrohre erleichternden und das sichere Festlegen im Inneren sichernden Lanzenhalter vorzuschlagen.

Die Aufgabe wird gemäß der Erfindung dadurch gelöst, dass das hülsenförmige Spannteil in Fließrichtung des Sauerstoffgases über das als Schiebehülse ausgebildete Außengehäuse des Spannkopfes hinaus verlängert und ein Vorfixierteil bildend ausgeführt ist, wobei die Schiebehülse über einen Kniehebel mit einem verschwenkbaren Handhebel gelenkig verbunden und mit dem im Außengehäuse verbleibenden Teil des Spannteils ein Zentralspannteil formend ausgebildet ist.

Mit Hilfe eines derart ausgebildeten Lanzenhalters ist es möglich, auch stark abgebogene Lanzenrohre sicher im Lanzenhalter zu fixieren. Das Vorfixierteil kann so eingestellt werden, dass es auf bestimmte Durchmesser eingestellt, auf die Lanzenrohre führend wirkt und so bereits beim Einschieben des Lanzenrohres in den Lanzenhalter eine fixierende Wirkung entfaltet. Dadurch, dass das Lanzenrohr im Vorfixierteil bereits sicher geführt und in eine Richtung geleitet wird, kann damit gleichzeitig auch ein gleichmäßiges Einschieben des Lanzenrohres in den Zentralspannteil gewährleistet werden. Es kommt nicht zum Anecken oder Ähnlichem am Innenbereich des Lanzenhalters und insbesondere am Hülsendichtring, sodass ein glattes Durchschieben des Lanzenrohres gewährleistet ist. Hat das Lanzenrohr dann seine Endposition erreicht und das Ausgangsventil im Lanzenhalter geöffnet, wird das Vorfixierteil durch Drehen von Hand festgespannt, woraufhin dann durch Betätigung des Handhebels und Kniehebels das hülsenförmige Spannteil über das Fixierteil geschoben und damit die Druckelemente auf die Wandung des Lanzenrohres so gepresst, dass die Festlegung des Lanzenrohres im Lanzenhalter wirksam wird. Kniehebel und Handhebel gewährleisten dabei, dass nicht aus Versehen die Fixierung des Lanzenrohres im Lanzenhalter aufgehoben oder teilweise aufgehoben wird, weil der Kniehebel durch den Handhebel in der Geschlossenstellung festgehalten ist. Es ergibt sich somit, dass durch die "Zwei-Punkt-Festlegung" des Lanzenrohres im Lanzenhalter, d. h. durch das Vorfixierteil und das Zentralspannteil eine optimale Festlegung des Lanzenrohres im Lanzenhalter immer sichergestellt werden kann und zwar auch dann wenn nicht gerade oder sogar abgewinkelte Lanzenrohre zum Einsatz kommen. Über das Vorfixierteil wird das Spannteil ein erstes Wegstück über das Fixierteil geschoben. Das zweite und entscheidende Wegteil zieht der Handhebel und der Kniehebel das Spannteil über das Fixierteil.

Durch das Vorfixierteil erreicht man wie weiter oben erläutert, bereits beim Einschieben des Lanzenrohres in den Lanzenhalter und das Drehen des Vorfixierteils eine erste Fixierung des Lanzenrohres bevor das Zentralspannteil überhaupt wirksam werden kann. Um bereits dann ein Mitdrehen oder Wegdrehen durch ein abgewinkeltes Lanzenrohr zu vermeiden bzw. wenigstens zu erschweren, ist gemäß der Erfindung vorgesehen, dass das Vorfixierteil und damit auch das Spannteil über ein Trapezgewinde mit der Schiebehülse verbunden ist. Mit dem Einschieben des Lanzenrohres in den Lanzenhalter wird das Vorfixierteil über das Trapezgewinde bereits in Richtung Lanzenhalter mit verschoben, um so die Vorfixierung zu optimieren. Aus dieser Vorfixierung kann sich dann wie erläutert das Lanzenrohr kaum verdrehen, weil das Trapezgewinde den Drehvorgang wirksam erschwert.

Dem Bediener des Lanzenhalters wird auf geschickte Weise der Verschiebeweg des Vorfixierteils in Richtung Lanzenhaltermitte bewusst gemacht, und zwar indem im Verschiebeweg des Vorfixierteils eine Führungskugel und in dessen Außenwand ein die Führungskugel aufnehmender und mit Rastwiderständen, die von der Führungskugel leicht überwindbar ausgebildet sind, ausgerüsteter Kanal vorgesehen ist. Wird das Vorfixierteil verdreht, also das Trapezgewinde ausgenutzt, rutscht die Führungskugel über die Rastwiderstände und macht so dem Benutzer auf einfache und zweckmäßige Art und Weise bewusst, dass und wie weiter er das Vorfixierteil in Richtung Lanzenhaltermittelpunkt verschoben hat, um so das Lanzenrohr vorzufixieren.

Das Verdrehen des Vorfixierteils wird gemäß der Erfindung dadurch erleichtert, dass die aus der Schiebehülse vorstehende Spitze des Vorfixierteils einen Drehring mit aufgerauter Oberfläche aufweist. Auch bei dicken Handschuhen ist so gewährleistet, dass der Drehring immer sicher zu ergreifen und zu verdrehen ist und das auch, wenn beispielsweise versehentlich eine Verschmutzung des Drehringes eingetreten ist.

Über den weiter vorne erwähnten Kniehebel und den Handgriff wird die Schiebehülse so verschoben, dass sich das Spannteil über das Fixierteil verschiebt und dabei das eingeschobene Lanzenrohr fixiert. Um eine gleichmäßige Bewegung der Schiebehülse zu gewährleisten, sieht die Erfindung vor, dass der Kniehebel an einem der Schiebehülse zugeordneten Schraubring und einem die Rückbrandsicherung und das Rückschlagventil aufnehmenden feststehenden Gehäuseteil gelenkig angeschlossen ist. Das das Rückschlagventil und die Rückbrandsicherung aufnehmende Gehäuseteil ist fest oder starr, sodass damit sichergestellt ist, dass durch Bewegung des Kniehebels die Schiebehülse sich gleichmäßig bewegen lässt.

Um Handverletzungen bei der Bedienung des Lanzenhalters zu vermeiden, ist vorgesehen, dass der mit dem Kniehebel verbundene Handhebel über ein verlängertes und vom Außengehäuse abstehendes Senkrechtrohrstück verfügend und damit dem Handhebel einen ausreichend großen Abstand zum Außengehäuse gewährend ausgebildet ist. Die Hand des Bedieners kann somit nicht beim Bedienen des Handhebels zwischen diesem und dem Außengehäuse eingeklemmt werden, sondern es ist immer ein entsprechender Abstand vorhanden, der so Verletzungen sicher ausschließt.

Ein gleichmäßiges Fixieren des eingeschobenen Lanzenrohres durch das Zentralspannteil wird durch die Druckelemente des Fixierteils bewirkt. Um hier eine möglichst hohe Gleichmäßigkeit und Überlastungen zu vermeiden, sieht die Erfindung vor, dass dem Fixierteil mindestens fünf Druckelemente in Form von auf das Lanzenrohr einwirkenden Kugeln zugeordnet sind. Auch bei größeren Lanzenrohrdurchmessern reichen diese fünf verteilt angeordneten Druckelemente in der Regel aus, weil durch das gleichmäßige Aufbringen des Druckes bei den fünf Kugeln einem Abrutschen oder Durchrutschen wirksam begegnet werden kann.

Beim Einschieben des Lanzenrohres in den Lanzenhalter wird und muss dieses Lanzenrohr bis zum Ausgangsventil und damit bis annähernd zur Rückbrandsicherung durchgeschoben werden. Diese Rückbrandsicherung besteht aus einer Sinterscheibe, die dann beschädigt werden kann, wenn das Ausgangsventil gegen die Federkraft zu weit über das eingeschobene Lanzenrohr geöffnet wird. Außerdem können sowohl die Zylinderfeder des Rückschlagsventils wie auch die Rückschlagfeder des Ausgangsventils durch das vorbeistreichende Sauerstoffgas in ihrer Wirksamkeit beeinträchtigt werden, insbesondere bei langen Einsätzen. Um dies zu verhindern, sieht die Erfindung vor, dass die dem sauerstoffeingangsseitigen Rückschlagventil zugeordnete Zylinderfeder in einem geschlossenen und vom Sauerstoffgas umflossenen, zweiteiligen Schutzgehäuse untergebracht ist, wobei das verschiebbare Gehäuseteil den Ventilkörper des Rückschlagventils bildend geformt ist. Damit ist es möglich, die Zylinderfeder vollständig aus dem Gasstrom herauszuhalten, sodass die Wirksamkeit des Rückschlagventils auf Dauer gewährleistet ist. Vorteilhaft ist, dass der Ventilkörper durch einen Teil dieses Gehäuses gebildet werden kann, sodass damit auch sichergestellt ist, dass dieser Gehäuseteil durch den Sauerstoffgasdruck sicher geöffnet wird.

Das Sauerstoffgas wird wie eben beschrieben um das zweiteilige Schutzgehäuse herumgeleitet, um dann das Sintermaterial, d. h. die Rückbrandsicherung zu durchfließen. Dieses Sintermaterial bzw. die Rückbrandsicherung wird aus dem Bewegungsbereich des Lanzenrohres völlig herausgenommen, wenn wie vorgeschlagen, diese Rückbrandsicherung hülsenförmig bzw. als Rohrstück ausgeformt und an das starre Gehäuseteil anschließend und ein federbelastetes Ausgangsventil im vorgegebenen Abstand teilweise umfassend ausgebildet ist. Das Sauerstoffgas wird somit um das zweiteilige Schutzgehäuse herumgeleitet, durchfließt dann dieses Rohrstück aus Sintermaterial und kann dann das Ausgangsventil passieren, das über das eingeschobene Lanzenrohr geöffnet wird. Dies ist nun möglich, ohne überhaupt Einfluss auf die Rückbrandsicherung zu nehmen.

Um nun auch die Rückschlagfeder des Ausgangsventils wirksam aus dem Gasstrom herauszuhalten, sieht die Erfindung als Weiterbildung vor, dass die Rückschlagfeder des Ausgangsventils ebenfalls in einem geschlossenen zweiteiligen Federschutzgehäuse untergebracht ist, wobei das den Ventilkörper bildende Federschutzgehäuseteil über das starre Federschutzgehäuseteil verschiebbar ist, das mit dem Boden des feststehenden Gehäuseteils verbunden ist. Das verschiebbare Federschutzgehäuseteil wird beim Einschieben des Lanzenrohres und beim Öffnen des Ausgangsventils über das starre Federschutzgehäuseteil geschoben, sodass sich das Ausgangsventil damit öffnet, ohne dass die Rückschlagfeder unter den Einfluss des durchströmenden Sauerstoffgases kommen kann. Vorteilhaft ist dabei gleichzeitig, dass die Feder auch nicht überbelastet werden kann, weil das übergeschobene Federschutzgehäuseteil nach Öffnen des Ausgangsventils gegen den Boden des sauerstoffeingangsseitigen Rückschlagventils anstößt. Das gleiche gilt umgekehrt übrigens auch für das sauerstoffeingangsseitige Rückschlagventil.

Sowohl das vom Sauerstoff umflossene zweiteilige Schutzgehäuse wie auch das vom Sauerstoffgas umströmte zweiteilige Federschutzgehäuse komprimieren die in den Gehäusen anstehende Luft beim Zusammenschieben, wobei ein Ausgleich vorteilhafterweise dadurch möglich ist, dass im gemeinsamen Boden beider Schutzgehäuse eine Verbindungsbohrung ausgebildet ist. Es kann also somit nicht zu einer Erhöhung der Federwirkung durch das Komprimieren der Luft kommen, weil ein Ausgleich erfolgt.

Wie der Beschreibung zu entnehmen ist, muss der Lanzenhalter sowohl nach dem Stand der Technik wie auch der vorliegenden Erfindung von Hand bedient werden, sodass das Gewicht für die Handhabungsfreundlichkeit wichtig ist. Um diesem entgegenzukommen, ist gemäß der Erfindung vorgesehen, dass die nicht tragenden Teile des Außengehäuses zur Gewichtsreduzierung als Hohlteile ausgebildet und/oder mit Abschrägungen oder Aussparungen versehen sind. Hier gibt es mehrere Möglichkeiten, wie insbesondere den beigefügten Figuren zu entnehmen ist, um Teile des Gehäuses mit solchen Abschrägungen zu versehen, was immerhin zu einer Gewichtsreduzierung von mehreren Prozentpunkten führt.

Neben der Möglichkeit, mit einer Drehhülse zu arbeiten und dabei das Spannteil auf das Fixierteil aufzuschieben, gibt es die beschriebene Möglichkeit, mit dem Handhebel und dem Kniehebel die notwendige Bewegung auszuführen. Weiter besteht die Möglichkeit, mit Hilfe eines Druckmittels zu arbeiten, wobei nach einer entsprechenden weiteren Möglichkeit vorgesehen ist, dass das hülsenförmige Spannteil in Fließrichtung des Sauerstoffgases über das als Schiebehülse ausgebildete Außengehäuse des Spannkopfes hinaus verlängert und ein Vorfixierteil bildend ausgeführt und einem das Lanzenrohr führenden Lanzenmanipulator unabhängig vom Fixierteil zugeordnet ist, und dass das Fixierteil mindestens drei Druckelemente in Form von Kugeln und/oder zwei bis fünf Zusatzkugeln zugeordnet sind und das das hülsenartige Spannteil mit einem als Doppelhülse ausgebildeten Außengehäuse und dem darin angeordnete Druckkolben verbunden ist, dass die Doppelhülse mehrere Druckfedern, den ringförmigen Druckkolben und einen über einen Druckmittelanschluss verfügenden Druckraum aufweisend ausgebildet ist.

Bei dieser Lösung wird in der Regel Druckluft über den Druckmittelanschluss in den Druckraum gepresst, so dass der ringförmige Druckkolben gegen die Kraft der Druckfedern innerhalb der Doppelhülse verschoben wird. Dieser Druckkolben ist mit dem Spannteil verbunden, sodass beim Verschieben des Druckkolbens das Spannteil über das Fixierteil geschoben oder umgekehrt herabgeschoben wird. In der Regel wird über die Einleitung der Druckluft oder des Druckmittels die Fixierung des Lanzenrohres gelöst, sodass dieses bzw. der davon noch vorhandene Überrest aus dem Gehäuse des Lanzenhalters herausgezogen werden kann. Wird dann ein neues Lanzenrohr eingeschoben, kann dies mit oder ohne das Fixierteil zu betätigen erfolgen, sodass dann nach Öffnen des Ausgangsventils der Druckmittelzufluss beendet wird und die Druckfedern ihre Kraft ausüben und dabei den Druckkolben zurückschieben und gleichzeitig das damit verbundene Spannteil über das Fixierteil ziehen, sodass damit die gewünschte Fixierung des Lanzenrohres im Lanzenhalter gesichert ist. Während der Handhabung des Lanzenrohres mit dem Lanzenhalter ist die Druckluft dann nicht mehr erforderlich. Vorteilhaft dabei ist, dass die gesamte Handhabung automatisch, also über den Lanzenmanipulator vorgenommen werden kann und damit ohne dass ein Bediener sich dem Lanzenhalter überhaupt nähern muss.

Eine zweckmäßige Weiterbildung ist dabei die, dass über den Umfang der Doppelhülse verteilt acht Druckfedern angeordnet sind. Dies hat den Vorteil, dass mit entsprechend "kleinbauenden" Druckfedern gearbeitet werden kann und darüber hinaus, dass durch die Verteilung auf acht Druckfedern die Bewegung des Druckkolbens sehr gleichmäßig erfolgt, also nicht nachteilig stoßweise. Die Druckfedern sind über entsprechende Bolzen geschoben, sodass ein gleichmäßiges Zusammenfahren der Druckfedern möglich und gesichert ist.

Ein beim Zusammenschieben der Druckfedern mögliches Luftpolster wird dadurch verhindert, dass die die Druckfedern aufnehmenden Rohre in der Doppelhülse oder der gesamte Federraum mit dem Innenbereich des Rohrhaltebereiches des Spannkopfes verbunden sind. Es ist also kein geschlossener Federraum, sondern vielmehr geht dieser in den Rohrhaltebereich über, sodass sich Druckspitzen problemlos abbauen lassen.

Die Erfindung zeichnet sich dadurch aus, dass ein Lanzenhalter geschaffen ist, der schon aufgrund des geringeren Gewichtes gut zu handhaben ist. Dies gilt sowohl für die Ausführung ohne Lanzenhaltermanipulator wie auch für die Ausführung mit Lanzenhaltermanipulator. Das einzuschiebende Lanzenrohr wird früh über das vorgeordnete Vorfixierteil erfasst und bereits bedingt festgelegt, sodass beim Betätigen des Zentralspannteils das Erreichen einer optimalen Fixierung des Lanzenrohres innerhalb des Lanzenhalters gesichert ist. Vorteilhaft ist weiter, dass das vorgeordnete Vorfixierteil eine Vorstufe auch bezüglich des Lanzendurchmessers darstellt, d. h. also mit zu großen Durchmessern erst gar nicht gearbeitet werden kann. Mit dem Lanzenhalter kann aber immer mit Lanzenrohren unterschiedlicher Durchmesser gearbeitet werden.

Schließlich wird das genaue Einschieben und Fixieren des Lanzenrohres innerhalb des Lanzenhalters noch dadurch optimiert, dass an der Spitze des Lanzenrohres ein Ausgangsventil, eine Rückbrandsicherung und ein Eingangsrückschlagventil vorhanden sind, die auch bei versehentlich zu weitem Einschieben des Lanzenrohres nicht in ihrer Wirkung beeinträchtigt sind. Gleichzeitig werden die Federn nicht durch das durchströmende Sauerstoffgas oder sonstige Medien beeinflusst, weil die notwendigen Federn hier in geschlossenen Gehäusen angeordnet und somit vor Außeneinflüssen geschützt sind. Auch die Rückbrandsicherung erhält eine neue Ausbildung, die für den einwandfreien und langen, sicheren Betrieb eines derartigen Lanzenhalters wichtig ist. Ist das Lanzenrohr abgeschmolzen und es steckt nur noch der nicht mehr verwendbare Rest im Lanzenhalter, kann dieser einwandfrei entnommen werden, weil beim Öffnen des Zentralspannteils das im Lanzenhalter steckende Restrohr immer noch durch das Vorfixierteil gehalten wird. Erst wenn damit die eigentliche Fixierung aufgehoben ist, kann das Restrohr durch Betätigen, d. h. durch Aufdrehen des Vorfixierteils auch entnommen und entsorgt werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Seitenansicht eines mit Handhebel ausgerüsteten Lanzenhalters, teilweise im Schnitt,
- Figur 2: eine Draufsicht auf den Lanzenhalter gemäß Figur 1,
- Figur 3: eine Seitenansicht des Lanzenhalters mit Handhebel im geöffneten Zustand,
- Figur 4: eine Vorderansicht des Lanzenhalters gemäß Figur 1,
- Figur 5: eine perspektivische Wiedergabe mit den beiden Kniehebeln,
- Figur 6: eine vereinfachte Wiedergabe eines Lanzenrohres,
- Figur 7: einen Lanzenhalter nach Figur 1 im Schnitt,
- Figur 8: einen per Druckmittel betätigbaren Lanzenhalter im Schnitt,
- Figur 9: eine Vorderansicht des Lanzenhalters nach Figur 8 und
- Figur 10: ein entsprechend geöffnetes Gehäuse des Lanzenhalters nach Figur 8.

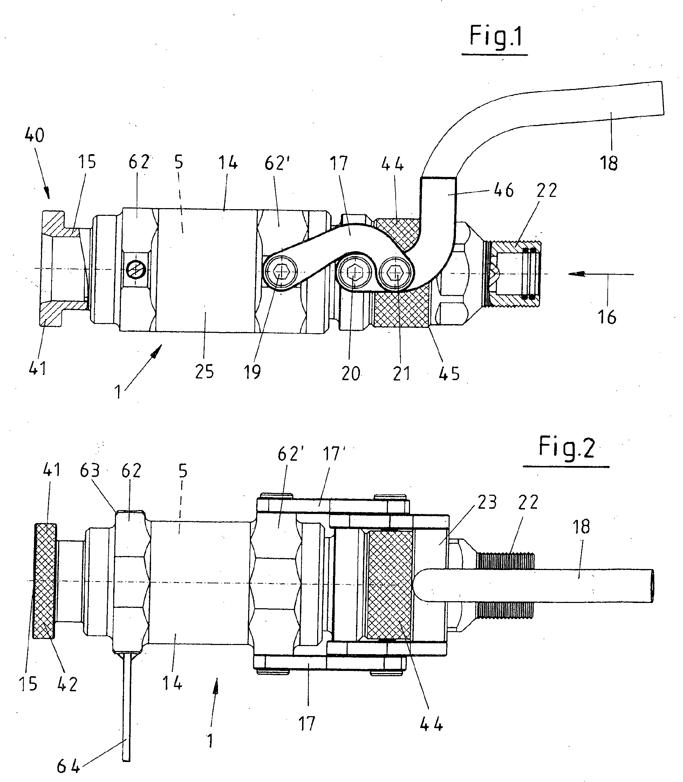

Bei dem in Figur 1 dargestellten Lanzenhalter 1 ist vor dem eigentlichen Spannkopf 5 das Vorfixierteil 15 dargestellt. Dieses Vorfixierteil 15 ist im Schnitt gezeigt und geht in das Fixierteil 6 über, das in Figur 1 nicht zu erkennen ist. Das Vorfixierteil 15 ist mit einem der Spitze 40 zugeordneten Drehring 41 ausgerüstet, wobei Figur 2 verdeutlicht, dass die Oberfläche 42 des Drehrings 41 aufgeraut ist, um dieses Bauteil auch mit dicken Handschuhen sicher betätigen zu können. Das Außengehäuse 14 des Lanzenhalters 1 weist an verschiedenen Stellen Abschrägungen 62, 62' auf. Ein Teil dieses Außengehäuses 14 ist als Schiebehülse 25 ausgebildet und als solches über den Kniehebel 17 und den Handhebel 18 in und entgegen der Fließrichtung 16 des Sauerstoffes verschiebbar. Aus diesem Grund ist der Kniehebel 17 mit der Schiebehülse 25 über das Gelenk 19 und mit dem feststehenden Teil über das Gelenk 21 verbunden. Der feststehende Teil ist der Schraubring 44 bzw. der die hier nicht erkennbare Rückbrandsicherung aufnehmende Gehäuseteil. Der Handhebel 18 ist über das Gelenk 20 am feststehenden Teil des Außengehäuses 14 angelenkt, wobei nach Figur 1 sich der Lanzenhalter 1 im geschlossenen Zustand befindet, wozu der Handhebel 18 mit seinem Senkrechtrohrstück 46 in Richtung auf den Lanzenhalter 1 herabgedrückt ist. Über das Senkrechtrohrstück 46 ist sichergestellt, dass auch in diesem geschlossenen Zustand genügend Abstand zum Lanzenhalter 1 bzw. zum Gaseintrittsanschluss 22 besteht, sodass Handverletzungen ausgeschlossen sind. Der die Rückbrandsicherung 9 und das Rückschlagventil 11 aufnehmende Gehäuseteil ist übrigens in Figur 1 mit dem Bezugszeichen 45 versehen.

Figur 2 zeigt eine Draufsicht des Lanzenhalters 1, wobei deutlich wird, dass der Kniehebel 17 auf beiden Seiten des Lanzenhalters 1 ausgebildet ist und somit eigentlich aus zwei Kniehebeln 17, 17' besteht. Diese sind über eine Querstrebe 23 zusammengefasst und können somit mit einem Handhebel 18 betätigt werden. Figur 2 zeigt weiter, dass im Bereich der Vorderkante 63 des Außengehäuses 14 eine Haltestange 64 angebracht ist, über die die Manipulation des Lanzenhalters 1 wesentlich erleichtert wird.

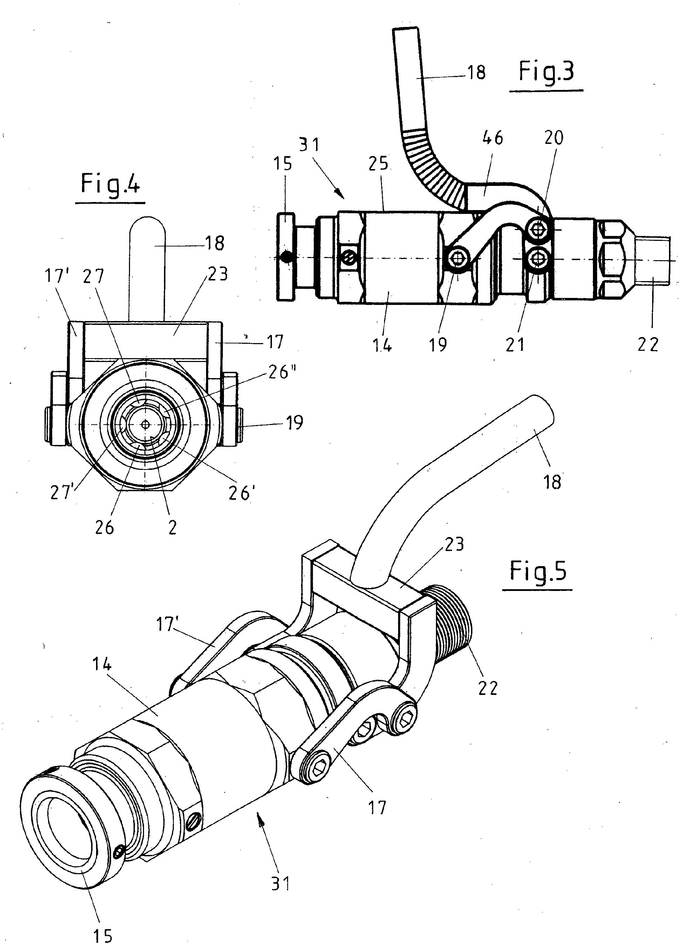

Während der Lanzenhalter 1 in Figur 1 im geschlossenen Zustand wiedergegeben ist, d. h. in dem Zustand, in dem das hier nicht gezeigte Lanzenrohr innerhalb des Lanzenhalters 1 fixiert ist, zeigt Figur 3 die geöffnete Position. Das als Schiebehülse 25 ausgebildete Außengehäuse 14 bzw. der entsprechende Teil ist hier in Richtung Vorfixierteil 15 verschoben, sodass die innerhalb des Außengehäuses 14 angeordneten Teile des Zentralspannteils 31 das Lanzenrohr 2 freigegeben haben bzw. freigeben würden. Der Handhebel 18 ist weit nach vorne verschwenkt, sodass sich das Gelenk 20 oberhalb des Gelenkes 21 befindet.

Figur 4 zeigt einen Lanzenhalter 1 gemäß Figur 1 in Vorderansicht. Erkennbar sind hier die als Druckelemente 26, 26', 26", 27, 27' eingesetzten Kugeln, die gleichmäßig über den Umfang verteilt angeordnet sind und so gleichmäßig auf das hier gezeigte Lanzenrohr 2 einwirken können. Erkennbar ist weiter, dass zwei Kniehebel 17, 17' vorhanden sind, die über die Querstrebe 23 verbunden sind und dem Handhebel 18 die Möglichkeit geben, den Kniehebel 17, 17' in Offen- oder Geschlossenposition zu bringen.

Auch die perspektivische Ansicht in Figur 5 zeigt letztlich die besondere Ausführung der Betätigungsvorrichtung 17, 18 für das Zentralspannteil 31, das sich innerhalb des Außengehäuses 14 befindet bzw. dieses mit umfasst.

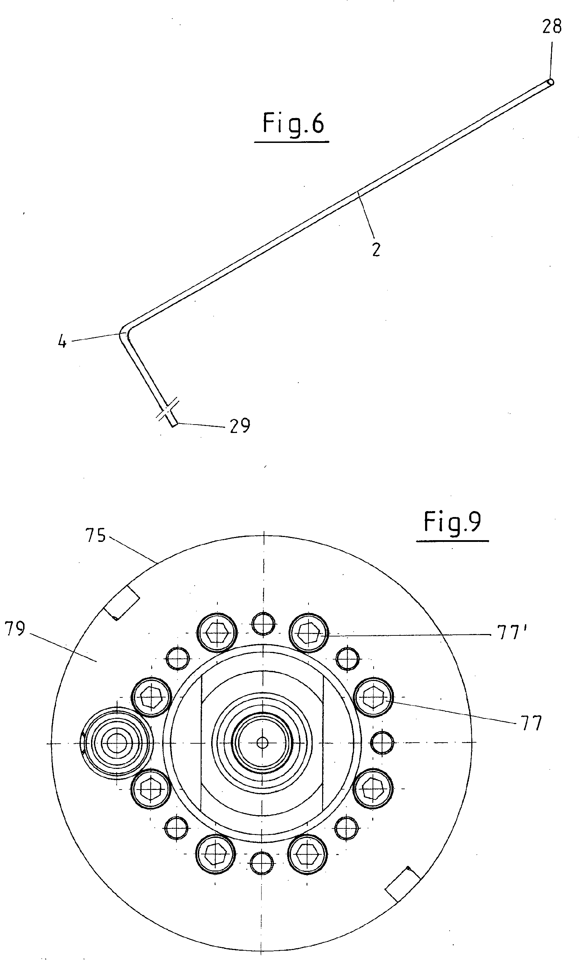

Ein schon angesprochenes Lanzenrohr 2 ist in abgebogener Ausführung in Figur 6 wiedergegeben. Erkennbar ist, dass durch die starke Abwinklung 4 die Manipulation zusammen mit dem Lanzenhalter 1 sehr erschwert ist, weil es schwierig ist, das Einführstück 28 in den Lanzenhalter 1 einzuführen, wenn das gegenüberliegende Endstück 29 sich in der Hand des Bedienungsmannes leicht verdrehen und verschwenken kann.

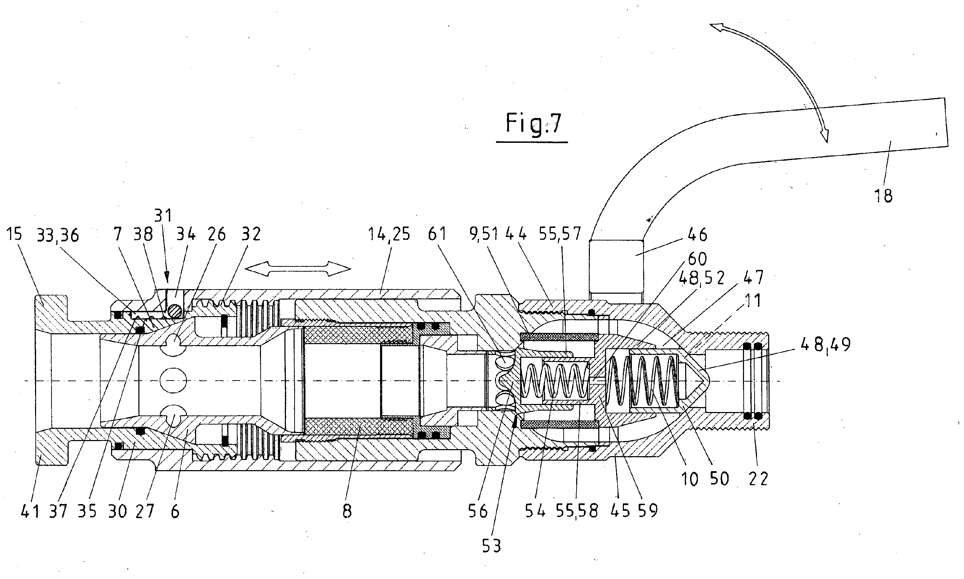

Das Innere des Lanzenhalters 1 ist in Figur 7 wiedergegeben, wobei deutlich wird, dass das außen liegende Vorfixierteil 15 mit seinem Drehring 41 leicht gedreht werden kann, weil innerhalb der Schiebehülse 25 ein entsprechendes Trapezgewinde 32 ausgebildet ist. Dieses Trapezgewinde 32 sorgt dafür, dass ein unfreiwilliges Rückdrehen des Vorfixierteils 15 erschwert ist. Außerdem verfügt das an das Vorfixierteil 15 anschließende Spannteil 7 über einen den Verschiebeweg 33 vorgebenden Kanal 36, in dem eine Führungskugel 34 angeordnet ist. Diese muss die im Kanal 36 ausgebildeten Rastwiderstände 37, 38 überwinden, sodass jeweils ein "Klack" entsteht, wenn das Vorfixierteil 15 entsprechend in das Außengehäuse 14 eingeschraubt wird.

Sowohl das im Außengehäuse 14 angeordnete Bauteil 30 des Spannteils 7 wie auch das Fixierteil 6 sind in Figur 7 gut erkennbar und es wird deutlich, dass beim Überschieben des Spannteils 7 über das Fixierteil 6 bzw. die darin befindlichen Druckelemente 26, 27 auf das hier nicht dargestellte Lanzenrohr 2 einwirken. Der Kanal 36 ist übrigens in die Außenwand 35 des Vorfixierteils 15 bzw. des Spannteils 7 eingelassen.

Mit dem Beeinflussen des Fixierteils 6 durch das Spannteil 7 und das Verschieben des Letzteren wird auch Druck auf die Hülsendichtung 8 ausgeübt, die dafür sorgt, dass das in diesen Hülsendichtring 8 eingeschobene Lanzenrohr 2 in diesem Bereich wirksam abgedichtet ist. Das eingeschobene Lanzenrohr 2 sorgt weiter dafür, dass das Ausgangsventil 53 geöffnet wird. Dieses Ausgangsventil 53 weist hier eine besondere Form auf und ist so geformt, dass sich ein Federschutzgehäuse 55 ergibt, das die Rückschlagfeder 54 wirksam umfasst und dafür sorgt, dass der vorbeistreichende Sauerstoffstrom diese Rückschlagfeder 54 nicht beeinflussen kann. Mit dem Verschieben des Federschutzgehäuseteils 57 werden die Bohrungen 61 frei, sodass dann bei geöffnetem Rückschlagventil 11 Sauerstoffgas in das hier nicht dargestellte Lanzenrohr 2 bzw. den eigentlichen Lanzenhalter 1 einströmen kann. Eine Beeinflussung des Ventilkörpers 56 mit dem verschiebbaren Federschutzgehäuseteil 57 ist möglich, weil sich dieses Federschutzgehäuseteil 57 auf das starre Federschutzgehäuseteil 58 aufschieben lässt. Dieses starre Federschutzgehäuseteil 58 ist mit dem Boden 59 des Schutzgehäuses 48 des Rückschlagventils 11 verbunden bzw. bildet damit eine Einheit.

Das Ausgangsventil 53 mit seinem Federschutzgehäuse 55 ist von einem Rohrstück 51 umgeben, das die Rückbrandsicherung 9 darstellt. Es besteht aus Sintermaterial und sorgt dafür, dass eine eventuell heiße, durch das Lanzenrohr 2 herbeigeführte Luft oder gar Flamme, sich nicht auf den Sauerstoff auswirken kann, der in dem dahinter angeordneten Bereich des Lanzenhalters 1 eventuell noch ansteht. Das Sauerstoffgas kann diese Rückbrandsicherung 9 aber problemlos durchströmen. Der das Rohrstück 51 durchströmende Gasstrom durchströmt vorher einen Gaskanal 47, der über das verschiebbare Gehäuseteil 49 des Schutzgehäuses 48 verschlossen ist bzw. bei geöffnetem Ausgangsventil 53 geöffnet ist. Dieses verschiebbare Gehäuseteil 49 dient gleichzeitig als Ventilkörper 50 für das Rückschlagventil 11 und schließt die gesamte Zylinderfeder 10 wirksam ein, sodass sie durch den Gasstrom nicht beeinflusst werden kann. Das verschiebbare Gehäuseteil 49 wird über das feststehende Gehäuseteil 52 des Schutzgehäuses 48 über das anstehende Sauerstoffgas verschoben und zwar gegen die Kraft der eingehausten Zylinderfeder 10. Die Zylinderfeder 10 sorgt dann dafür, dass beim Schließen des Ausgangsventils 53 oder bei fehlendem Bedarf von Sauerstoff das verschiebbare Gehäuseteil 49 als Ventilkörper 50 für das Schließen des Rückschlagventils 10 sorgt.

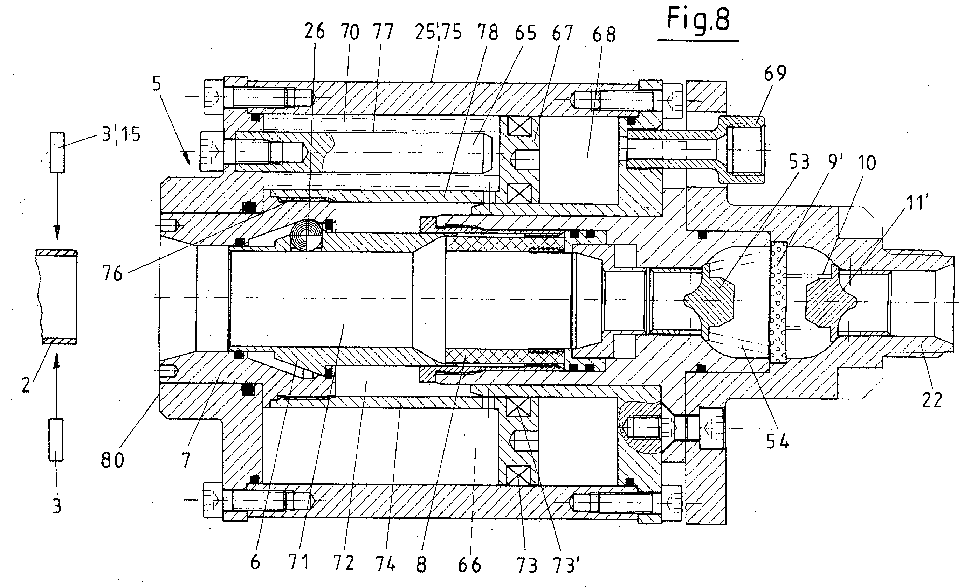

Das Schutzgehäuse 48 und das Federschutzgehäuse 55 mit dem gemeinsamen Boden 59 sind über eine Verbindungsbohrung 60 verbunden, um Druckpolster gar nicht erst entstehen zu lassen. Während der Lanzenhalter 1 nach Figur 1 und Figur 7 und den vorhergehenden Figuren letztlich bezüglich der Fixierwirkung über den Handhebel 18 zu bedienen ist, ist nach Figur 8 vorgesehen, dass die Fixiereinrichtung des Lanzenhalters 1 über ein Druckmedium vor allem Druckluft betätigt wird. Hierzu ist das Außengehäuse 14 als Doppelhülse 75 ausgebildet. Zwischen den beiden Wänden dieser Doppelhülse 75 oder auch in besonderen Röhren sind mehrere, vorzugsweise acht Druckfeder 65, 66 untergebracht. Diese Druckfedern 65, 66 können über den Druckkolben 77 vorgespannt werden, wenn über den Druckmittelanschluss 69 Druckluft in den Druckraum 68 hineingeleitet wird. Diese sorgt dann dafür, dass der Druckkolben 67 in Richtung Vorderseite 80 des Spannkopfes 5 verschoben wird. Der als Druckring ausgebildete Druckkolben 67 verfügt beidseitig über Dichtungen 73, 73' und ist über die Verbindungsstange 74 mit dem Spannteil 7 verbunden. Bei Belastung des Druckkolbens 67 durch Druckluft wird also das Spannteil 7 vom Fixierteil 6 herabgeschoben, sodass dann das Lanzenrohr 2 heraus- oder auch hineingeschoben werden kann. Schon wegen des Gewichtes eines derartigen Lanzenhalters 1 wird ein solcher in der Regel mit einem Lanzenmanipulator 3 betrieben, wobei hier diesem Lanzenmanipulator 3 ein Vorfixierterteil 15 zugeordnet ist oder zugeordnet sein kann, um die bei den vorhergehenden Figuren beschriebene Funktion der Vorfixierung zu übernehmen.

Soll nun das Lanzenrohr 2 eingeschoben und im Lanzenhalter 1 fixiert werden, so muss die Druckluft zurückgenommen werden. Die Druckfedern 65, 66 sorgen dann dafür, dass der Druckkolben 67 zurückgeschoben wird und dabei über die Verbindungsstange 74 das Spannteil 7 über das Fixierteil 6 zieht. Es kommt dann, wie auch bei den anderen Ausführungen, dazu, dass die als Kugeln ausgebildeten Druckelemente 26 auf die Außenwand des Lanzenrohres 2 aufgepresst werden.

Die Druckfedern 65, 66 befinden sich wie schon erwähnt in entsprechenden Röhren oder aber in einem gemeinsamen Federraum 70, wobei dieser Federraum 70 mit dem Innenbereich 71 des Rohrhaltebereiches 72 verbunden ist, sodass sich hier keine Druckspitzen ergeben können.

Die schon erwähnte Verbindungsstange 74 des Druckkolbens 67 ist mit dem Spannteil 7 über ein Gewinde 76 verbunden. Bei dieser Verbindungsstange 74 kann es sich auch um ein Rohr, also ein Art Druckkolbenverlängerung 78 handeln oder auch um eine Mehrzahl derartiger Verbindungsstangen 74.

Die einzelnen Druckfedern 65, 66 sind um Federstifte 77 gelegt, sodass sie beim Zusammendrücken durch den Druckkolben 67 nicht ausgelenkt werden können. Diese Federstifte 77, es handelt sich vorzugsweise um acht solcher Federstifte 77, sind um den Umfang der Doppelhülse 75 verteilt angeordnet, was Figur 9 entnommen werden kann. Dort befindet sich auch das Bezugszeichen 79, das den feststehenden Teil der Doppelhülse 75 bezeichnet, wobei natürlich die gesamte Außenhülse als feststehender Teil ausgeformt ist.

In Figur 9 ist außerdem wiedergegeben, dass über den Umfang verteilt acht solcher Federstifte 77, 77' angeordnet sind, während die dazwischen liegenden Verschraubungen der Fixierung der entsprechenden Bauteile der Doppelhülse 75 dienen.

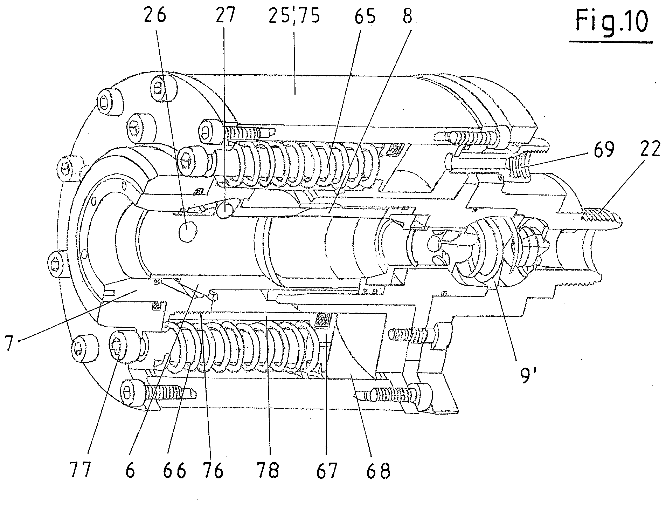

Entsprechendes kann auch Figur 10 entnommen werden, wobei deutlich gezeigt ist, wie die einzelnen Druckfedern 65, 66 in der Doppelhülse 75 untergebracht sind. Deutlich erkennbar ist auch der Druckraum 68 der mit dem Druckmittelanschluss 69 in Verbindung steht und der bei entsprechender Füllung über das darin gelagerte Druckmedium dafür sorgt, dass der Druckkolben 67 die Druckfedern 65, 66 zusammendrückt.

Bei dem in Figur 8 und 10 wiedergegebenen Lanzenhalter 1 ist eine zum Stand der Technik gehörende Rückbrandsicherung 9 und Rückschlagventil 11 wiedergegeben. Auf eine nähere Erläuterung dazu kann hier verzichtet werden. Insbesondere aber Figur 10 zeigt aber recht gut, dass beim Einschieben eines Lanzenrohres 2 in den Lanzenhalter 1, dieses Lanzenrohr 2 den Hülsendichtring 8 passieren muss. Durch die Länge und Ausbildung dieses Hülsendichtringes 8 ist dafür Sorge getragen, dass das Lanzenrohr 2 so abgedichtet ist, dass das über den Gaseintrittsanschluss 22 heranströmende Sauerstoffgas nicht in die Umgebung gelangt, sondern gezielt durch das Lanzenrohr 2 zum Verbraucher strömt. Es versteht sich, dass die aus Figur 7 bekannten Rückbrandsicherung 9 und Rückschlagventil 11 auch bei dem Lanzenhalter 1 gemäß Figur 8 eingesetzt werden können.

Alle genannten Merkmale, auch die den Zeichnungen allein zu entnehmenden, werden allein und in Kombination als erfindungswesentlich angesehen.

## Patentansprüche

1. Lanzenhalter für Lanzenrohre (2), insbesondere Sauerstofflanzen, die vor allem in der Hütten- und Stahlindustrie eingesetzt werden, mit einem Spannkopf (5), der ein das Lanzenrohr (2) einfassendes Fixierteil (6) und ein darauf verschiebbares, hülsenförmiges Spannteil (7) aufweist, und einem das Lanzenrohr (2) einklemmenden und über das Fixierteil (6) beeinflussbaren und damit abdichtenden Hülsendichtring (8) sowie einer Rückbrandsicherung (9) und einem über eine Zylinderfeder (10) beaufschlagten Rückschlagventil (11),
**dadurch gekennzeichnet,**
**dass** das hülsenförmige Spannteil (7) in Fließrichtung (16) des Sauerstoffgases über das als Schiebehülse (25) ausgebildete Außengehäuse (14) des Spannkopfes (5) hinaus verlängert und ein Vorfixierteil (15) bildend ausgeführt ist, wobei die Schiebehülse (25) über einen Kniehebel (17) mit einem verschwenkbaren Handhebel (18) gelenkig verbunden und mit dem im Außengehäuse (14) verbleibenden Teil (30) des Spannteils (7) ein Zentralspannteil (31) formend ausgebildet ist.

2. Lanzenhalter nach Anspruch 1,
**dadurch gekennzeichnet,**
**dass** das Vorfixierteil (15) über ein Trapezgewinde (32) mit der Schiebehülse (25) verbunden ist.

3. Lanzenhalter nach Anspruch 1,
**dadurch gekennzeichnet,**
**dass** im Verschiebeweg (33) des Vorfixierteils (15) eine Führungskugel (34) und in dessen Außenwand (35) ein die Führungskugel (34) aufnehmender und mit Rastwiderständen (37, 38), die von der Führungskugel (34) leicht überwindbar ausgebildet sind, ausgerüsteter Kanal (36) vorgesehen ist.

4. Lanzenhalter nach einem der vorhergehenden Ansprüche,
**dadurch gekennzeichnet,**
**dass** die aus der Schiebehülse (25) vorstehende Spitze (40) des Vorfixierteils (15) einen Drehring (41) mit aufgerauter Oberfläche (42) aufweist.

5. Lanzenhalter nach Anspruch 1,
**dadurch gekennzeichnet,**
**dass** der Kniehebel (17) an einem der Schiebehülse (25) zugeordneten Schraubring (44) und einem die Rückbrandsicherung (9) und das Rückschlagventil (11) aufnehmenden Gehäuseteil (45) gelenkig angeschlossen ist.

6. Lanzenhalter nach einem der vorhergehenden Ansprüche,
**dadurch gekennzeichnet,**
**dass** der mit dem Kniehebel (17) verbundene Handhebel (18) über ein verlängertes und vom Außengehäuse (14) abstehendes Senkrechtrohrstück (46) verfügend und damit dem Handhebel (18) einen ausreichend großen Abstand zum Außengehäuse (14) gewährend ausgebildet ist.

7. Lanzenhalter nach einem der vorhergehenden Ansprüche,
**dadurch gekennzeichnet,**
**dass** dem Fixierteil (6) mindestens fünf Druckelemente (26, 27) in Form von auf das Lanzenrohr (2) einwirkenden Kugeln zugeordnet sind.

8. Lanzenhalter nach Anspruch 1,
**dadurch gekennzeichnet,**
**dass** die dem sauerstoffeingangsseitigen Rückschlagventil (11) zugeordnete Zylinderfeder (10) in einem geschlossenen und vom Sauerstoffgas umflossenen, zweiteiligen Schutzgehäuse (48) untergebracht ist, wobei das verschiebbare Gehäuseteil (49) den Ventilkörper (50) des Rückschlagventils (11) bildend geformt ist.

9. Lanzenhalter nach einem der vorhergehenden Ansprüche,
**dadurch gekennzeichnet,**
**dass** die Rückbrandsicherung (9) hülsenförmig bzw. als Rohrstück (51) ausgeformt und an das starre Gehäuseteil (52) anschließend und ein federbelastetes Ausgangsventil (53) im vorgegebenen Abstand teilweise umfassend ausgebildet ist.

10. Lanzenhalter nach einem der vorhergehenden Ansprüche,
**dadurch gekennzeichnet,**
**dass** die Rückschlagfeder (54) des Ausgangsventils (53) ebenfalls in einem geschlossenen zweiteiligen Federschutzgehäuse (55) untergebracht ist, wobei das den Ventilkörper (56) bildende Federschutzgehäuseteil (57) über das starre Federschutzgehäuseteil (58) verschiebbar ist, das mit dem Boden (59) des feststehenden Gehäuseteils (52) verbunden ist.

11. Lanzenhalter nach einem der vorhergehenden Ansprüche,
**dadurch gekennzeichnet,**
**dass** im gemeinsamen Boden (59) beider Schutzgehäuse (48, 55) eine Verbindungsbohrung (60) ausgebildet ist.

12. Lanzenhalter nach einem der vorhergehenden Ansprüche,
**dadurch gekennzeichnet,**
**dass** die nicht tragenden Teile des Außengehäuses (14) zur Gewichtsreduzierung als Hohlteile ausgebildet und/oder mit Abschrägungen (68) oder Aussparungen versehen sind.

13. Lanzenhalter nach einem der vorhergehenden Ansprüche,
**dadurch gekennzeichnet,**
**dass** an der Vorderkante (63) des als Schiebehülse (25) ausgebildeten Außengehäuses (14) eine davon abstehende Haltestange (64) angeordnet ist.

14. Lanzenhalter für Lanzenrohre (2), insbesondere Sauerstofflanzen, die vor allem in der Hütten- und Stahlindustrie eingesetzt werden, mit einem Spannkopf (5), der ein das Lanzenrohr (2) einfassendes Fixierteil (6) und ein darauf verschiebbares, hülsenförmiges Spannteil (7) aufweist, und einem das Lanzenrohr (2) einklemmenden und über das Fixierteil (6) beeinflussbaren und damit abdichtenden Hülsendichtring (8) sowie einer Rückbrandsicherung (9) und einem über eine Zylinderfeder (10) beaufschlagten Rückschlagventil (11),
**dadurch gekennzeichnet,**
**dass** das hülsenförmige Spannteil (7) in Fließrichtung (16) des Sauerstoffgases über das als Schiebehülse (25) ausgebildete Außengehäuse (14) des Spannkopfes (5) hinaus verlängert und ein Vorfixierteil (15) bildend ausgeführt und einem das Lanzenrohr (2) führenden Lanzenmanipulator (3) unabhängig vom Fixierteil (6) zugeordnet ist, und dass das Fixierteil (6) mindestens drei Druckelemente (26, 27) in Form von Kugeln und/oder zwei bis fünf Zusatzkugeln zugeordnet sind und dass das hülsenartige Spannteil (7) mit einem als Doppelhülse (75) ausgebildeten Außengehäuse (14) und den darin angeordneten Druckkolben (67) verbunden ist, dass die Doppelhülse (75) mehrere Druckfedern (65, 66), den ringförmigen Druckkolben (67) und einen über einem Druckmittelanschluss (69) verfügenden Druckraum (68) aufweisend ausgebildet ist.

15. Lanzenhalter nach Anspruch 14,
**dadurch gekennzeichnet,**
**dass** über den Umfang der Doppelhülse (75) verteilt acht Druckfedern (65, 66) angeordnet sind.

16. Lanzenhalter nach Anspruch 14,
**dadurch gekennzeichnet,**
**dass** die die Druckfedern (65, 66) aufnehmenden Rohre in der Doppelhülse (75) oder der gesamte Federraum (70) mit dem Innenbereich (71) des Rohrhaltebereiches (72) des Spannkopfes (5) verbunden ist.

## Claims

1. Lance holder for lance pipes (2), in particular oxygen lances, that are used above all in the iron and steel making industries, with a clamping head (5), having a fixing part (6) surrounding the lance pipe (2) and a tubular clamping part (7) that can be moved on this and a tubular sealing ring (8) that clamps the lance pipe (2) and is controllable and thus sealing through the fixing part (6) as well as a backfire safety device (9) and a non-return valve (11) that is actuated by a cylindrical spring (10),
**characterised by the fact**
that the tubular clamping part (7) is extended in the direction of flow (16) of the oxygen gas beyond the outer housing (14) of the clamping head (5) shaped as a sliding sleeve (25) and designed to form a prefixing part (15), whereby the sliding sleeve (25) is connected flexibly with a swivelling hand lever (18) through a knee lever (17) and is designed to form a central clamping part (31) with the part (30) of the clamping part (7) remaining in the outer housing (14).

2. Lance holder in accordance with claim 1,
**characterised by the fact**
that the prefixing part (15) is connected with the sliding sleeve (25) via a trapezoidal thread (32).

3. Lance holder in accordance with claim 1,
**characterised by the fact**
that a guide ball (34) is provided in the displacement path (33) of the prefixing part (15) and in its outer wall (35) there is a channel (36) to receive the guide ball (34) having catches (37, 38) that can easily be overcome by the guide ball (34).

4. Lance holder in accordance with one of the above claims,
**characterised by the fact**
that the tip (40) of the prefixing part (15) projecting from the sliding sleeve (25) has a rotating ring (41) with a roughened surface (42).

5. Lance holder in accordance with claim 1,
**characterised by the fact**
that the knee lever (17) is connected in an articulated manner to a ring nut (44) assigned to the sliding sleeve (25) and a housing component (45) holding the backfire safety device (9) and the non-return valve (11).

6. Lance holder in accordance with one of the above claims,
**characterised by the fact**
that the hand lever (18) connected with the knee lever (17) is designed with an extended vertical pipe piece (46) protruding from the outer housing (14) thus guaranteeing that the hand lever (18) has a sufficiently large clearance from the outer housing (14).

7. Lance holder in accordance with one of the above claims,
**characterised by the fact**
that at least five pressure elements (26, 27) in the form of balls acting on the lance pipe (2) are assigned to the fixing part (6).

8. Lance holder in accordance with claim 1,
**characterised by the fact**
that the cylindrical spring (10) assigned to the non-return valve (11) on the oxygen inlet side is housed in an enclosed two-part protective enclosure (48) surrounded by oxygen gas, whereby the sliding housing part (49) is shaped to form the valve body (50) of the non-return valve (11).

9. Lance holder in accordance with one of the above claims,
**characterised by the fact**
that the backfire safety device (9) is designed in the form of a sleeve or as a pipe section (51) and is designed connected to the rigid housing part (52) and partly enfolding a spring-loaded outlet valve (53) in the given spacing.

10. Lance holder in accordance with one of the above claims,
**characterised by the fact**
that the check spring (54) of the outlet valve (53) is also housed in an enclosed two-part spring protective housing (55), whereby the spring protective housing part (57) forming the valve body (56) is movable via the rigid spring protective housing part (58) that is connected to the floor (59) of the fixed housing part (52).

11. Lance holder in accordance with one of the above claims,
**characterised by the fact**
that a connecting bore hole (60) is formed in the common floor (59) of the two protective housings (48, 55).

12. Lance holder in accordance with one of the above claims,
**characterised by the fact**
that the non-bearing parts of the outer housing (14) are designed as hollow parts to reduce weight and/or are provided with bevels (68) or recesses.

13. Lance holder in accordance with one of the above claims,
**characterised by the fact**
that there is a holding rod (64) on the front edge (63) of the outer housing (14) designed as a sliding sleeve (25) projecting from the edge.

14. Lance holder for lance pipes (2), in particular oxygen lances, that are used above all in the iron and steel making industries, with a clamping head (5), having a fixing part (6) surrounding the lance pipe (2) and a tubular clamping part (7) that can be moved on this and a tubular sealing ring (8) that clamps the lance pipe (2) and is controllable and thus sealing through the fixing part (6) as well as a backfire safety device (9) and a non-return valve (11) that is actuated by a cylindrical spring (10),
**characterised by the fact**
that the tubular clamping part (7) is extended in the direction of flow (16) of the oxygen gas beyond the outer housing (14) of the clamping head (5) shaped as a sliding sleeve (25) and designed to form a prefixing part (15) and is assigned to a lance manipulator (3) carrying the lance pipe (2) independent of the fixing part (6), and that the fixing part (6) has at least three pressure elements (26, 27) in the form of balls and/or two to five additional balls and that the sleeve-type clamping part (7) is connected with an outer housing (14) formed as a double sleeve (75) and the pressure pistons contained therein, that the double sleeve (75) is designed having several pressure springs (65, 66), the ring-shaped pressure piston (67) and a pressure chamber (68) that has a pressure connection (69).

15. Lance holder in accordance with claim 14,
**characterised by the fact**
that eight pressure springs (65, 66) are arranged distributed over the circumference of the double sleeve (75).

16. Lance holder in accordance with claim 14,
**characterised by the fact**
that the pipes in the double sleeve (75) holding the pressure springs (65, 66) or the complete spring chamber (70) are connected with the interior (71) of the pipe mounting section (72) of the clamping head (5).

## Revendications

1. Porte-lance pour tubes de lance (2), notamment lances à oxygène qui sont surtout employées dans l'industrie sidérurgique et métallurgique, avec une tête de serrage (5) qui présente une pièce de fixation (6) entourant le tube de lance (2) et une pièce de serrage (7) en forme de douille pouvant être coulissée sur ce dernier, et avec cela une bague d'étanchéité de douille (8) bloquant le tube de lance (2) et pouvant être influencée par l'intermédiaire de la pièce de fixation (6) en assurant ainsi une étanchéité, ainsi qu'un dispositif antiretour de flamme (9) et un clapet antiretour (11) alimenté via un ressort de vérin (10),
**caractérisé par le fait**
**que** la pièce de serrage en forme de douille (7) est prolongée dans le sens de l'écoulement (16) de l'oxygène au-delà du boîtier extérieur (14) de la tête de serrage (5) réalisé sous la forme d'une douille coulissante (25) et en formant une pièce de fixation préalable (15), sachant que la douille coulissante (25) est reliée de façon articulée à un levier manuel pivotant (18) par l'intermédiaire d'un levier coudé (17) et en formant une pièce de serrage centrale (31) avec la partie (30) de la pièce de serrage (7) restant dans le boîtier extérieur (14).

2. Porte-lance selon la revendication 1,
**caractérisé par le fait**
**que** la pièce de fixation préalable (15) est reliée à la douille coulissante (25) par l'intermédiaire d'un filetage trapézoïdal (32).

3. Porte-lance selon la revendication 1,
**caractérisé par le fait**
**que** dans le chemin de déplacement (33) de la pièce de fixation préalable (15) sont prévus une bille de guidage (34), et dans la paroi extérieure (35) de cette dernière un canal équipé (36) réceptionnant la bille de guidage (34) et pourvu de résistances d'encrantage (37, 38) pouvant être facilement surmontées par la bille de guidage (34).

4. Porte-lance selon une des revendications précédentes,
**caractérisé par le fait**
**que** la pointe (40) de la pièce de fixation préalable (15) dépassant de la douille coulissante (25) présente un anneau tournant (41) avec une surface rendue rugueuse (42).

5. Porte-lance selon la revendication 1,
**caractérisé par le fait**
**que** le levier coudé (17) est raccordé de façon articulée à une bague vissée (44) attribuée à la douille coulissante (25) et à une pièce de boîtier (45) réceptionnant le dispositif antiretour de flamme (9) et le clapet antiretour (11).

6. Porte-lance selon une des revendications précédentes,
**caractérisé par le fait**
**que** le levier manuel (18) relié au levier coudé (17) est réalisé de manière à garder une distance suffisamment grande vis-à-vis du boîtier extérieur (14) en étant pourvu d'un élément de tuyau vertical (46) rallongé et écarté du boîtier extérieur (14), et par conséquent du levier manuel (18).

7. Porte-lance selon une des revendications précédentes,
**caractérisé par le fait**
**qu'**au moins cinq éléments de pression (26, 27) ayant la forme de sphères agissant sur le tube de lance (2) sont attribués à la pièce de fixation (6).

8. Porte-lance selon la revendication 1,
**caractérisé par le fait**
**que** le ressort de vérin (10) attribué au clapet antiretour (11) du côté de l'entrée de l'oxygène est logé dans un boîtier protecteur (48) en deux pièces fermé et entouré d'oxygène, sachant que la pièce de boîtier (49) pouvant être coulissée est réalisée de manière à constituer le corps de vanne (50) du clapet antiretour (11).

9. Porte-lance selon une des revendications précédentes,
**caractérisé par le fait**
**que** le dispositif antiretour de flamme (9) est réalisé en forme de douille ou d'un élément de tuyau (51), en étant raccordé à la pièce de boîtier (52) rigide, et en entourant en partie une vanne de sortie (53) chargée par un ressort à la distance prescrite.

10. Porte-lance selon une des revendications précédentes,
**caractérisé par le fait**
**que** le ressort de retour (54) de la vanne de sortie (53) est également logé dans un boîtier protecteur de ressort (55) en deux pièces fermé, sachant que la pièce de boîtier protecteur de ressort (58) formant le corps de vanne (56) peut être déplacé à l'aide d'une pièce de boîtier protecteur de ressort (58) qui est reliée au fond (59) de la pièce de boîtier fixe (52).

11. Porte-lance selon une des revendications précédentes,
**caractérisé par le fait**
**qu'**un perçage de liaison (60) est formé dans le fond commun (59) des deux boîtiers protecteurs (48, 55).

12. Porte-lance selon une des revendications précédentes,
**caractérisé par le fait**
**que** les pièces non porteuses du boîtier extérieur (14) sont réalisées sous la forme de pièces creuses dans le but de réduire le poids et/ou sont pourvues de chanfreins (68) ou de réservations.

13. Porte-lance selon une des revendications précédentes,
**caractérisé par le fait**
**qu'**une tige de maintien (64) est attribuée au bord avant (63) du boîtier extérieur (14) constitué sous la forme d'une douille coulissante (25), à une certaine distance de ce dernier.

14. Porte-lance pour tubes de lance (2), notamment lances à oxygène qui sont surtout employées dans l'industrie sidérurgique et métallurgique, avec une tête de serrage (5) qui présente une pièce de fixation (6) entourant le tube de lance (2) et une pièce de serrage (7) en forme de douille pouvant être coulissée sur ce dernier, et avec cela une bague d'étanchéité de douille (8) bloquant le tube (2) et pouvant être influencée par l'intermédiaire de la pièce de fixation (6) en assurant ainsi une étanchéité, ainsi qu'un dispositif antiretour de flamme (9) et un clapet antiretour (11) alimenté via un ressort de vérin (10),
**caractérisé par le fait**
**que** la pièce de serrage en forme de douille (7) est prolongée dans le sens de l'écoulement (16) de l'oxygène au-delà du boîtier extérieur (14) de la tête de serrage (5) réalisé sous la forme d'une douille coulissante (25) et en formant une pièce de fixation préalable (15), et est attribuée à un manipulateur de lance (3) guidant le tube de lance (2) indépendamment de la pièce de fixation (6), au moins trois éléments de pression (26, 27) ayant la forme de sphères et/ou deux à cinq sphères supplémentaires étant attribués à la pièce de fixation (6) et la pièce de serrage en forme de douille (7) étant relié au boîtier extérieur (14) réalisé sous la forme d'une douille double (75) et aux pistons de pression (67) qui y sont disposés, que la douille double (75) est réalisée de manière à présenter plusieurs ressorts de pression (65, 66), le piston de pression en forme d'anneau (67), et un espace de pression (68) disposant d'un raccordement au moyen de pression (69).

15. Porte-lance selon la revendication 14,
**caractérisé par le fait**
**que** huit ressorts de pression (65, 66) sont disposés de façon répartie sur la circonférence de la douille double (75).

16. Porte-lance selon la revendication 14,
**caractérisé par le fait**
**que** les tuyaux réceptionnant les ressorts de pression (65, 66) dans la douille double (75) ou bien la totalité de l'espace de ressort (70) est reliée à la zone intérieure (71) de la zone de maintien du tuyau (72) de la tête de serrage (5).
